# EUROPÄISCHE PATENTSCHRIFT

(11) **EP 3 408 556 B1**
(45) Veröffentlichungstag und Bekanntmachung des Hinweises auf die Patenterteilung: **15.07.2020**
(21) Anmeldenummer: 17702349.6
(22) Anmeldetag: 27.01.2017
(51) Int. Cl.: F16F 9/05, F16F 9/38, B60G 11/27, F16J 3/04

(54) **LUFTFEDER MIT FALTENBALG**
AIR SPRING HAVING A PLEATED BELLOWS
RESSORT PNEUMATIQUE À SOUFFLET PLISSÉ

(30) Priorität: 29.01.2016 EP 16465503; 22.02.2016 DE 102016202642
(43) Veröffentlichungstag der Anmeldung: 05.12.2018
(73) Patentinhaber: Continental Teves AG & Co. OHG, 60488 Frankfurt am Main (DE)
(72) Erfinder: GLEU, Jens-Uwe, 30855 Langenhagen (DE); POPA-BIANU, Tiberiu, 550345 Sibiu (RO)
(86) Internationale Anmeldenummer: PCT/EP2017/051712
(87) Internationale Veröffentlichungsnummer: WO 2017/129717

(56) Entgegenhaltungen:
- EP-A1- 2 133 604
- DE-A1-102009 003 829
- DE-A1-102013 211 644
- DE-A1-102014 222 945
- FR-A1- 2 843 931
- GB-A- 2 262 150
- JP-A- 2009 063 014
- US-A- 4 529 213

## Beschreibung

Die Erfindung betrifft eine Luftfeder gemäß dem Oberbegriff von Anspruch 1.

Luftfedern oder Luftfederbeine, die zwischen einem Fahrwerk und einer Karosserie eines Kraftfahrzeuges eingespannt werden und einen Luftfederbalg aufweisen, welcher wiederum zwischen einem Luftfederdeckel und einem Luftfederkolben befestigt ist, sind in einer Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens, welcher bei einem Luftfederbein an einem Zylinderrohr des Stoßdämpfers befestigt ist, ab.

Bei Luftfedern im PKW-Bereich werden möglichst dünnwandige Luftfederbälge eingesetzt, da diese einen hohen Abrollkomfort sicherstellen. Um bei diesen eine genügende Tragfähigkeit des Gesamtsystems zu erreichen, werden die Luftfederbälge bzw. die Luftfedern mit Außenführungen versehen, nämlich mit einer den Luftfederbalg umgebenden rohrförmigen Hülse als Stützkorsett oder Stützkörper. So lässt sich beispielsweise ein dünner Luftfederbalg mit einer dünnen Leichtmetallhülse als Stützkörper auf hohe Innendrücke und damit hohe Tragfähigkeiten bei gleichzeitig gutem Harshness-Verhalten optimieren. Die Au-ßenführungen sind dabei so ausgebildet und angeordnet, dass der Luftfederbalg einerseits an der Außenseite des Luftfederabrollkolbens und andererseits an der Innenoberfläche der Au-ßenführung abrollen kann.

Dies hat jedoch zum Nachteil, dass solche Luftfederbälge im Gegensatz zu dickwandigen und somit robusteren Luftfederbälgen im Nutzfahrzeugbereich sehr viel empfindlicher auf Ablagerungen und Fremdkörpern an den Abrollflächen reagieren. Der komfortable Luftfederbalg reagiert auf das Überrollen von Ablagerungen oder Fremdkörpern sehr leicht mit starkem Abrieb oder Zerstörung seiner filigranen Festigkeitsträger, was den Ausfall der Luftfeder zur Folge haben kann.

Daher gilt es die Rollfalten des Luftfederbalges besonders zu schützen, was durch einen die Luftfeder umgebenden Schutzbalg oder Faltenbalg erreicht wird. Besonders bei außengeführten Luftfedern wird ein Faltenbalg verwendet, um den Luftfederbalg vor Verschmutzungen (z.B. Staub, Sand oder Steinen von der Straße im Fahrbetrieb) zu schützen, wie es beispielsweise aus der DE 103 02 495 A1 bekannt ist. Durch die Verwendung eines Faltenbalges entsteht jedoch das Problem, dass sich bei Federbewegungen der Luftfeder gleichzeitig das Luftvolumen des von dem Faltenbalg umgebenden Raumes ändert und somit ein Luftaustausch zwischen der vom Faltenbalg eingeschlossenen Luft und der verschmutzten Luft außerhalb stattfinden muss.

Bei einem Luftfederbein erfolgt die Anbindung des Faltenbalges am unteren Ende des Stoßdämpferkolbens und dem unteren Ende der Außenführung, wie es z.B. der DE 10 2013 211 644 A1 zu entnehmen ist. Die Befestigung des Faltenbalges wird an der Außenführung dichtend und am Kolben mittels Belüftungsöffnungen vorgesehen, so kann am Kolbenende ein gewisser Luftaustausch stattfinden. Damit soll sichergestellt werden, dass kein Schmutz von oben in das Faltenbalginnere eintreten kann und der durch Einsaugen eingetretene Schmutz in Richtung Fahrwerk wieder nach außen gelangen kann.

Die Anordnung der Faltenbalgbelüftung an dem Fahrwerk zugewandten Fußpunkt des Faltenbalges führt dazu, dass bei Einfederbewegungen der Luftfeder wegen der einhergehenden Volumenverringerung im Faltenbalginnern die Luft nach unten in Richtung Fahrwerk ausgestoßen wird, gleichzeitig gibt der Luftfederbalg an der Außenführung einen zunehmenden Bereich der Anlagefläche frei und deckt am Luftfederabrollkolben einen potentiell verschmutzten Bereich ab. Bei Ausfederbewegungen der Luftfeder wird wegen der Volumenzunahme im Faltenbalginnern potentiell verschmutzte Luft von unten eingesaugt, gleichzeitig deckt der Luftfederbalg an der Außenführung einen zunehmenden und potentiell verschmutzten Bereich der Anlagefläche ab und legt am Kolben Anlagefläche frei. Nachteilig ist damit, dass bei Federbewegungen Staub und/oder Fremdkörper ins Faltenbalginnere gesaugt werden. Problematisch wird das, wenn dieses Material nicht wieder nach außen gelangt, sondern in den Abrollbereich des Luftfederbalges gerät, wodurch der Faltenbalg seine erforderliche Schutzfunktion verloren hat und eine Beschädigung des Luftfederbalges nicht ausgeschlossen ist.

Bei einer Luftfeder, wie sie aus der DE 10 2009 003 829 A1, die den Oberbegriff des Anspruchs 1 offenbart, bekannt ist, wird der Faltenbalg an einem Kragen oder Vorsprung der Außenführung befestigt. Der Kragen ist Teil der Außenführung und weist eine Belüftung in Form von mehreren Lüftungsbohrungen auf. Da sich die Luftfeder in Über-Kopf-Lage befindet, ist der Kragen der Außenführung dem Fahrwerk zugewandt. Die Belüftung des Faltenbalges findet also am Fußpunkt des Faltenbalges statt. Diese Art der Befestigung erfordert einen gewissen Abstand zwischen Außenführung und Faltenbalg, was sich allerdings aufgrund des geringen zur Verfügung stehenden Bauraums nachteilig auf das verwendbare Luftfederbalgvolumen auswirkt. Unvorteilhaft ist solch eine Außenführung auch im Fertigungsprozess, denn es sind weitere Fertigungsschritte erforderlich, wie z.B. das Umformen des Kragens und das Einbringen von den Belüftungsbohrungen.

Aus der US 4 529 213 A ist ein Faltenbalg für einen Stoßdämpfer bekannt. Ein Endbereich des Faltenbalgs wird mittels eines geteilten Rings an einem Dämpfergehäuse befestigt. Dieser Ring umfasst Öffnungen damit eine Belüftung innerhalb des Faltenbalgs erfolgen kann. Der Ring ist dergestalt, dass er aus zwei halbkreisförmigen Elementen zusammengesetzt ist. Diese halbkreisförmigen Elemente sind derart geformt, dass sie zusammengedrückt oder aufgeweitet werden können. Um das Faltenbalgende an dem Dämpfergehäuse zu befestigen, sind verschiedenste Befestigungsarten vorgeschlagen, um den Ring an der Innenseite des Faltenbalgendes anzuformen. Entweder über formschlüssige Ausgestaltungen des Faltenbalgendes mit den halbkreisförmigen Elementen oder über ein Verkleben der halbkreisförmigen Elemente an der Innenwandung des Faltenbalgendes. Anschließend wird der mit Ring versehene Faltenbalg auf das Dämpfergehäuse geschoben. Diese Art der Montage ist allerdings umständlich, da der Ring als Befestigungsmittel zunächst Innenseitig des Faltenbalgs anzubringen ist.

Daher ist es Aufgabe der Erfindung, eine verbesserte Befestigung eines Faltenbalges an einer Außenführung bereitzustellen.

Die der Erfindung zugrundeliegende Aufgabe wird mit den Merkmalen des unabhängigen Patentanspruchs gelöst.

Es wird eine Luftfeder für ein Fahrwerk eines Kraftfahrzeugs bereitgestellt, wobei die Luftfeder einen Luftfederdeckel und einen Luftfederkolben umfasst, wobei zwischen dem Luftfederdeckel und dem Luftfederkolben ein Luftfederbalg aus elastomerem Material luftdicht eingespannt ist, wobei der Luftfederbalg zumindest teilweise von einer hülsenförmigen Außenführung umschlossen ist, wobei ein Faltenbalg den Luftfederbalg und die Außenführung umgibt, wobei zwischen der Außenführung und dem Faltenbalg ein separat ausgeführtes, luftdurchlässiges Befestigungsmittel vorgesehen ist, mittels welchem der Faltenbalg an der Außenführung fixiert ist.

Durch das separate luftdurchlässige Befestigungsmittel ist eine einfache Fixierung des Faltenbalges an der Außenführung realisiert, welche dennoch eine gute Luftüberströmung erlaubt. Damit wird eine Belüftung des vom Faltenbalg umgebenen Raums ermöglicht, wodurch sich im Luftfederbetrieb kein Vakuum bilden kann. Indem das Befestigungsmittel als zusätzliches Element an der Außenführung vorgesehen ist, sind keine wesentlichen Veränderungen an einer üblichen Außenführung notwendig.

Das mehrteilige Befestigungsmittel hat den Vorteil, dass die Hauptfunktionen (Fixierung von Faltenbalg an der Außenführung und Belüftung des Faltenbalgs) aufgeteilt werden können und damit bestmöglich ausgeführt werden.

Erfindungsgemäß umfasst das Befestigungsmittel einen Adapterring und ein Spannmittel. Durch die Ausgestaltung eines aus Kunststoff gefertigten Adapterrings und eines

Spannmittels, welches beispielsweise ein Kabelbinder sein kann, wird eine einfach zu montierende und kostengünstige Befestigung für den Faltenbalg geschaffen. Das Spannmittel sorgt für eine sichere Fixierung an der Außenführung und der Adapterring ermöglicht die Belüftung.

Nach einer bevorzugten Ausführungsform ist der Adapterring in Umfangsrichtung unterbrochen bzw. ein Teilstück ist ausgespart. Dadurch ist in vorteilhafterweise ein flexibler und anpassbarer Adapterring geschaffen, welcher in seinem Durchmesser reduzierbar ist. Vorzugsweise wird der Faltenbalg über den Adapterring an der Außenführung befestigt, wobei der Adapterring mittels des Spannmittels an der Außenführung befestigt ist. Über das Spannmittel wird der Adapterring an der Außenführung befestigt bzw. verzerrt. Der Adapterring ist weiterhin daraufhin ausgelegt den Faltenbalg zu fixieren und eine gute Belüftung zu ermöglichen. Dies hat den Vorteil, dass durch das Verzerren des Spannmittels der Adapterring in seinem Durchmesser auf den Durchmesser der Außenführung angepasst werden kann. Durch diese konstruktive Maßnahme ist ein universell einsetzbares Befestigungsmittel für verschiedene Außenführungen geschaffen, ohne dass im jeweiligen Anwendungsfall ein spezieller Adapterring angefertigt werden muss.

Nach einer weiteren bevorzugten Ausführungsform umfasst der Adapterring einen Innenring und einem Außenring, wobei der Innenring mit dem Außenring verbunden ist. Dabei bildet der Innenring eine Befestigungsfläche für das Spannmittel aus und der Außenring bildet die Befestigungsvorrichtung für den Faltenbalg. Der Innenring und der Außenring sind besonders bevorzugt über vereinzelte Zwischenstege miteinander verbunden. Die Zwischenstege sind deshalb vorgesehen, damit Ausnehmungen zur Luftüberströmung im Adapterring ausgebildet sind.

Bevorzugt ist das Spannmittel in den Adapterring einsetzbar, wobei es besonders bevorzugt zwischen dem Innenring und dem Außenring eingelegt ist. Das Spannmittel sitzt vorteilhafterweise press am Innenring an und weist auch nur eine geringe Breite auf, wodurch die Luft ohne großen Widerstand den Adapterring überströmen kann.

Nach einer weiteren bevorzugten Ausführungsform weist der Innenring in Richtung Außenring Mittel zur Fixierung des Spannmittels auf. Besonders bevorzugt sind die Mittel als Haken oder Krallen ausgebildet und dienen der Sicherung des Spannmittels gegen ein Verrutschen im Adapterring. Die Haken sind mehrfach in Umfangsrichtung am Innenring vorgesehen und verteilt. Vorzugsweise weist der Innenring hin zur Außenführung Mittel zur Fixierung des Adapterrings an der Außenführung auf. Ebenfalls sind vorzugsweise die Mittel als Haken oder Krallen mehrfach in Umfangsrichtung an der Innenseite des Innenrings vorgesehen, wobei die Krallen jeweils an der oberen und unteren Kante des Innenrings angeordnet sind. Mittels der Krallen kann der Adapterring sicher und fest an der Außenführung fixiert werden kann.

Nach einer weiteren bevorzugten Ausführungsform weist der Faltenbalg eine Falte mit zwei Winkeln auf, wobei der Faltenbalg mittels der Falte formschlüssig am Adapterring fixiert ist. Besonders bevorzugt ist die Falte durch zwei rechte Winkel geformt. Um den Faltenbalg mit dem Adapterring zu verbinden, ist eine einfache teilweise rechtecksförmige Falte vorgesehen, mittels welcher der Faltenbalg formschlüssig am Adapterring anliegt. Der Formschluss bildet sich an der unteren äußeren Kante des Adapterrings, welche ebenfalls einen rechten Winkel aufweist. Der Adapterring sieht an der oberen äußeren Kante eine Fase vor, welche für den Montageprozess dahingehend vorteilhaft gestaltet ist, dass der Faltenbalg, vom Luftfederkolben aus kommend, einfach über die Fase gezogen werden kann und anschließend an der unteren Kante fixiert ist.

Nach einer weiteren bevorzugten Ausführungsform ist die Au-ßenführung mittels eines Innenspannrings am Luftfederbalg fixiert.

Bevorzugt weist die Außenführung einen verjüngten Klemmbereich auf und das Befestigungsmittel ist dabei besonders bevorzugt auf gleicher Höhe mit dem Innenspannring an der Außenführung im Klemmbereich positioniert. Dabei liegen die inneren Fixierungsmittel des Innenrings vorteilhafterweise an den Knickkanten des verjüngten Klemmbereichs an, womit eine besonders gute Befestigung des Adapterrings geschaffen ist. Des Weiteren ermöglicht der verjüngte Klemmbereich eine kompakte Gestaltung der Luftfeder in Hinblick auf den begrenzten Einbauraum. Aufgrund dessen, dass das Befestigungsmittel im verjüngten Klemmbereich positioniert ist, vergrößert sich der äußere Durchmesser der Luftfeder nicht wesentlich und auch der Faltenbalg muss im Befestigungsbereich keinen größeren Durchmesser aufweisen.

Nach einer weiteren bevorzugten Ausführungsform umgibt der Faltenbalg die Abrollflächen von Luftfederkolben und Luftfederdeckel, wobei der der Faltenbalg am Luftfederkolben und/oder Luftfederdeckel befestigt ist. Da der Luftfederbalg unter Ausbildung einer Rollfalte am Luftfederdeckel und/oder Luftfederkolben abrollt gilt es die Abrollflächen bzw. Rollfalten zu schützen. So kann der Faltenbalg mit seinem oberen Ende am Luftfederkolben befestigt werden, während das untere Ende am Luftfederdeckel frei ist. Dadurch wird die obere Rollfalte am Luftfederkolben effektiv vor Verschmutzungen geschützt und das freie untere Ende des Faltenbalgs geht über die Falte am Luftfederdeckel ausreichend hinaus und erlaubt im Zusammenhang mit dem luftdurchlässigen Befestigungsmittel eine freie Luftzirkulation im Faltenbalg.

Verwendung findet die Luftfeder in einem Fahrwerk, vorzugsweise in einem Luftfedersystem, für ein Kraftfahrzeug. Bevorzugt kann die Befestigung des Faltenbalgs auch bei einer Luftfeder mit integriertem Stoßdämpfer verwendet werden.

Weitere bevorzugte Ausführungsformen der Erfindung ergeben sich aus den Unteransprüchen und der nachfolgenden Beschreibung von Ausführungsbeispielen an Hand der Figuren.

Es zeigen
- Fig. 1: eine beispielsgemäße Luftfeder,
- Fig. 2: eine beispielsgemäße Befestigung eines Faltenbalgs,
- Fig. 3: einen weiteren Ausschnitt der Befestigung nach Fig. 2,
- Fig. 4: ein beispielsgemäßes Befestigungsmittel, und
- Fig. 5: die Befestigung nach Fig. 2 und 3 in perspektivischer Ansicht.

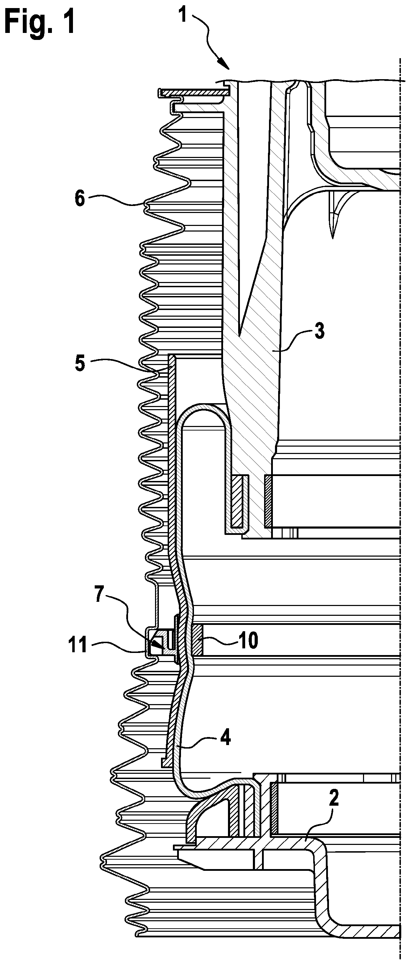

Fig. 1 zeigt die linke Schnitthälfte einer in Über-Kopf-Lage befindlichen Luftfeder 1. Luftfeder 1 umfasst dabei einen Luftfederkolben 3, welcher an einer Fahrzeugkarosserie befestigt wird, und einen Luftfederdeckel 2, welcher an einem Radträger befestigt wird. Zwischen Luftfederkolben 3 und Luftfederdeckel 2 ist ein elastomerer Luftfederbalg 4 luftdicht eingespannt. Luftfederbalg 4 rollt unter Ausbildung einer Rollfalte an der Abrollfläche des Luftfederkolbens 3 ab. Am Luftfederdeckel 2 bildet Luftfederbalg 4 eine weitere Falte und kann auch partiell am Luftfederdeckel 2 abrollen. Luftfederbalg 4 wird zumindest teilweise von einer hülsenförmigen Außenführung 5 umschlossen, wobei Außenführung 5 mittels eines Innenspannrings 10 am Luftfederbalg 4 fixiert ist.

Zum Schutz der Rollfalten wird Luftfeder 1 von einem Faltenbalg 6 umgeben. Faltenbalg 6 ist mit seinem oberen Ende am Luftfederkolben 3 und im mittleren Bereich mittels einem Befestigungsmittels 7 an Außenführung 5 fixiert. Das untere Ende des Faltenbalgs 6 ist im Bereich des Luftfederdeckels 2 frei und Faltenbalg 6 geht in seiner Länge über den Befestigungsbereich des Luftfederbalges 4 am Luftfederdeckel 2 hinaus.

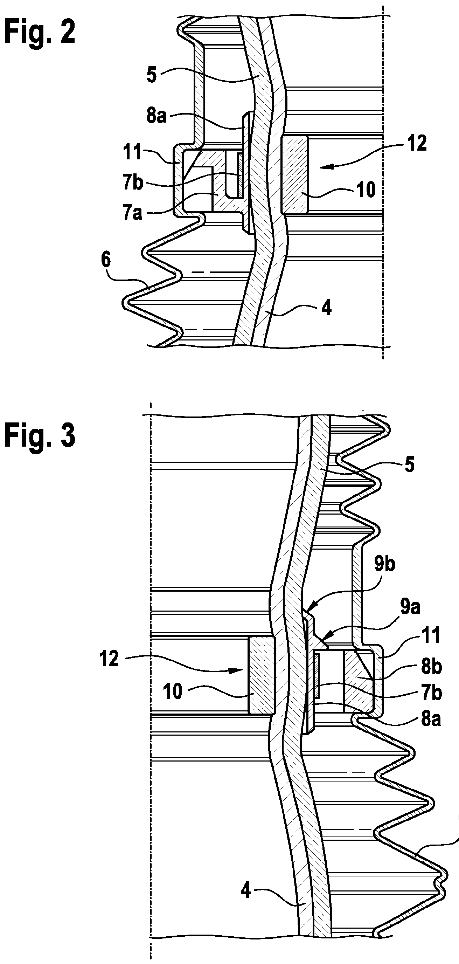

In Fig. 2 ist in einem Ausschnitt der Luftfeder eine beispielsgemäße Befestigung des Faltenbalges 6 an Außenführung 5 gezeigt. Das Befestigungsmittel 7 umfasst dabei einen Adapterring 7a und ein Spannmittel 7b. Mittels Spannmittel 7b wird Adapterring 7a an einem Klemmbereich 12 an der Außenführung 5 fixiert. Im Inneren des Luftfederbalges 4 befindet sich Innenspannring 10 auf gleicher Höhe mit dem Befestigungsmittel 7 im Klemmbereich 12.

Adapterring 7a weist an seinem äußeren Umfang eine untere und eine obere Kante auf, wobei die untere Kante rechtwinkelig ausgebildet ist und die obere Kante eine Fase aufweist. Faltenbalg 6 weist eine entsprechende Falte mit zwei rechten Winkeln auf, wobei die Falte mit dem unteren Winkel an der unteren Kante des Adapterrings 7a anliegt. Dadurch ist Faltenbalg 6 mittels Formschluss am Adapterring 7a befestigt. Die Fase der oberen Kante des Adapterrings 7a dient dazu Faltenbalg 6 vom Luftfederkolben aus kommend über den Adapterring 7a ziehen zu können. Adapterring 7a ist aus einem Kunststoff hergestellt, beispielsweise aus Polypropylen.

Fig. 3 zeigt in einem weiteren Ausschnitt der Luftfeder die beispielsgemäße Befestigung des Faltenbalges 6 an der Außenführung 5. Im Detail ist zu sehen, dass sich Adapterring 7a aus einem Innenring 8a und einem Außenring 8b zusammensetzt. Innenring 8a und Außenring 8b sind miteinander verbunden. Die Verbindungen sind durch vereinzelte Zwischenstege realisiert, wobei Innenring 8a und Außenring 8b zumindest an den unteren Kanten miteinander Verbunden sind. Durch die vereinzelten Zwischenstege entstehen mehrere Ausnehmungen. Mittels dieser Ausnehmungen ist das Befestigungsmittel luftdurchlässig und erlaubt somit eine Luftzirkulation für den Raum zwischen Luftfederbalg 4 mit Außenführung 5 und Faltenbalg 6. Die Belüftung ist wichtig, damit sich im Betrieb kein Vakuum in dem vom Faltenbalg 6 umschlossenen Raum bilden kann. Wie eingangs beschrieben, kann verschmutze Luft beim Einfedern durch die Ausnehmungen des Befestigungsmittels entweichen und beim Ausfedern kann die Luft über die Ausnehmungen in den Raum zwischen Luftfeder und Faltenbalg 6 strömen.

Weiterhin ist ersichtlich, dass das Spannmittel 7b am äußeren Umfang des Innenrings 8a anliegt. Zur festen Fixierung und gegen ein Verrutschen des Spannmittels 7b sind Fixierungsmittel 9a in Form von mehreren Haken oder Krallen am Innenring 8a in Richtung Außenring 8b vorgesehen. Ebenfalls befindet sich an der oberen und unteren Kante am inneren Umfang des Innenrings 8b weitere Fixierungsmittel 9b, welche als Haken oder Krallen das Befestigungsmittel an Außenführung 5 im vorgesehenen Klemmbereich 12 sicher fixieren.

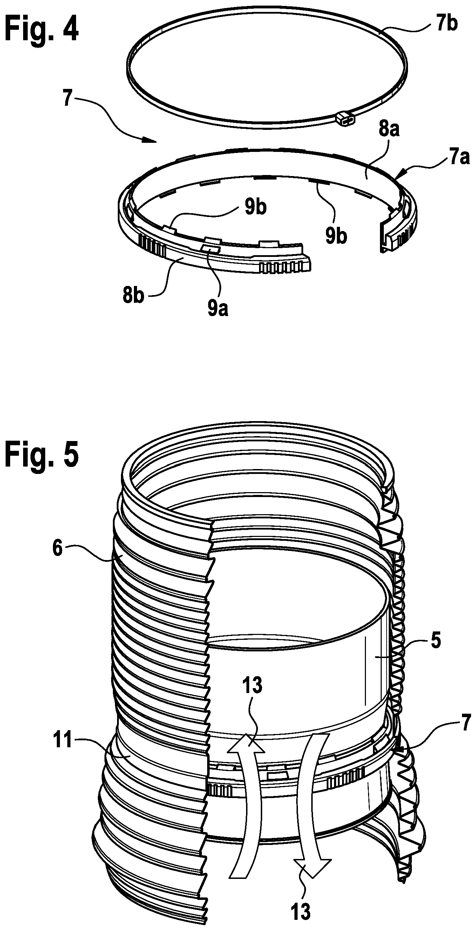

In perspektivischer Ansicht ist in Fig. 4 das Befestigungsmittel 7 umfassend aus Adapterring 7a und Spannmittel 7b gezeigt. Spannmittel 7b kann als Kabelbinder ausgestaltet sein und zwischen Innenring 8a und Außenring 8b eingelegt werden. Des Weiteren sind eine Vielzahl an Fixierungsmitteln 9a, 9b am Innenring 8a ausgebildet.

Adapterring 7a ist in Umfangsrichtung unterbrochen bzw. ein Teilstück ist ausgenommen. Dadurch wird Adapterring 7a beim Fixieren mittels Spannmittel 7b in seinem Durchmessen reduziert und somit in einfacher Art und Weise an die Außenführung angepasst und an dieser kraftschlüssig befestigt. Der Innenspannring der Luftfeder wirkt als Gegenpart zum Befestigungsmittel 7, wodurch eine besonders vorteilhafte Kombination aus der Befestigung der Außenführung am Luftfederbalg mittels Innenspannring und mit der Befestigung des Faltenbalgs an der Außenführung mittels Befestigungsmittel 7 geschaffen ist.

In perspektivischer Ansicht zeigt Fig. 5 einen geschnittenen Faltenbalg 6 mit Blick auf Außenführung 5, wobei Befestigungsmittel 7 an der Außenführung 5 fixiert ist und Faltenbalg 6 mittels Falte 11 am Befestigungsmittel 7 fixiert ist. Verdeutlicht wird die Luftüberströmung 13, welche durch das luftdurchlässige Befestigungsmittel 7 ermöglicht wird und zu einer Luftzirkulation im Faltenbalg führt.

### Bezugszeichenliste

- 1: Luftfeder
- 2: Luftfederdeckel
- 3: Luftfederkolben
- 4: Luftfederbalg
- 5: Außenführung
- 6: Faltenbalg
- 7: Befestigungsmittel
- 7a: Adapterring
- 7b: Spannmittel
- 8a: Innenring
- 8b: Außenring
- 9a: Fixierungsmittel
- 9b: Fixierungsmittel
- 10: Innenspannring
- 11: Falte
- 12: Klemmbereich
- 13: Luftüberströmung

## Patentansprüche

1. Luftfeder (1) für ein Fahrwerk eines Kraftfahrzeugs umfassend einen Luftfederdeckel (2) und einen Luftfederkolben (3), wobei zwischen dem Luftfederdeckel (2) und dem Luftfederkolben (3) ein Luftfederbalg (4) aus elastomerem Material luftdicht eingespannt ist, wobei der Luftfederbalg (4) zumindest teilweise von einer hülsenförmigen Außenführung (5) umschlossen ist, wobei ein Faltenbalg (6) den Luftfederbalg (4) und die Außenführung (5) umgibt, **dadurch gekennzeichnet, dass** zwischen der Außenführung (5) und dem Faltenbalg (6) ein separat ausgeführtes, luftdurchlässiges Befestigungsmittel (7) vorgesehen ist, mittels welchem der Faltenbalg (6) an der Außenführung (5) fixiert ist, wobei das Befestigungsmittel (7) mehrteilig ausgeführt ist und einen Adapterring (7a) und ein Spannmittel (7b) umfasst.

2. Luftfeder (1) nach Anspruch 1, **dadurch gekennzeichnet, dass** der Adapterring (7a) in Umfangsrichtung unterbrochen ist.

3. Luftfeder (1) nach Anspruch 1 oder 2, **dadurch gekennzeichnet, dass** der Faltenbalg (6) über den Adapterring (7a) an der Außenführung (5) befestigt ist, wobei der Adapterring (7a) mittels des Spannmittels (7b) an der Außenführung (5) befestigt ist.

4. Luftfeder (1) nach einem der Ansprüche 1 bis 3, **dadurch gekennzeichnet, dass** der Adapterring (7a) einen Innenring (8a) und einem Außenring (8b) umfasst, wobei der Innenring (8a) mit dem Außenring (8b) verbunden ist.

5. Luftfeder (1) nach Anspruch 4, **dadurch gekennzeichnet, dass** der Innenring (8a) in Richtung Außenring (8b) Mittel (9a) zur Fixierung des Spannmittels (7b) aufweist.

6. Luftfeder (1) nach Anspruch 4 oder 5, **dadurch gekennzeichnet, dass** der Innenring (8a) hin zur Außenführung (5) Mittel (9b) zur Fixierung des Adapterrings (7a) an der Außenführung (5) aufweist.

7. Luftfeder (1) nach einem der Ansprüche 1 bis 6, **dadurch gekennzeichnet, dass** das Spannmittel (7b) in den Adapterring (7a), insbesondere zwischen Innenring (8a) und Außenring (8b), eingesetzt ist.

8. Luftfeder (1) nach einem der Ansprüche 1 bis 7, **dadurch gekennzeichnet, dass** der Faltenbalg (6) eine Falte (11) mit zwei Winkeln, insbesondere mit rechten Winkeln, aufweist, wobei der Faltenbalg (6) mittels der Falte (11) formschlüssig am Adapterring (7a) fixiert ist.

9. Luftfeder (1) nach einem der Ansprüche 1 bis 8, **dadurch gekennzeichnet, dass** die Außenführung (5) mittels eines Innenspannrings (10) am Luftfederbalg (4) fixiert ist.

10. Luftfeder (1) nach einem der Ansprüche 1 bis 9, **dadurch gekennzeichnet, dass** die Außenführung (5) einen verjüngten Klemmbereich (12) aufweist.

11. Luftfeder (1) nach Anspruch 9 oder 10, **dadurch gekennzeichnet, dass** das Befestigungsmittel (7) auf gleicher Höhe mit dem Innenspannring (10) an der Außenführung (5), insbesondere im Klemmbereich (12), positioniert ist.

12. Luftfeder (1) einem der Ansprüche 1 bis 11, **dadurch gekennzeichnet, dass** der Faltenbalg (6) die Abrollflächen von Luftfederkolben (3) und Luftfederdeckel (2) umgibt, wobei der Faltenbalg (6) am Luftfederkolben (3) und/oder Luftfederdeckel (2) befestigt ist.

13. Fahrwerk für ein Kraftfahrzeug, insbesondere ein Luftfedersystem, mit einer Luftfeder (1) nach einem der Ansprüche 1 bis 12.

## Claims

1. Air spring (1) for a running gear of a motor vehicle, comprising an air spring cover (2) and an air spring piston (3), wherein an air spring bellows (4) made of elastomeric material is clamped in an air-tight manner between the air spring cover (2) and the air spring piston (3), wherein the air spring bellows (4) is at least partially surrounded by a sleeve-shaped outer guide (5), wherein a pleated bellows (6) surrounds the air spring bellows (4) and the outer guide (5), **characterized in that** a separately formed, air-permeable fastening means (7) is provided between the outer guide (5) and the pleated bellows (6), by means of which fastening means the pleated bellows (6) is fixed to the outer guide (5), wherein the fastening means (7) is formed in multiple parts and comprises an adapter ring (7a) and a clamping means (7b).

2. Air spring (1) according to Claim 1, **characterized in that** the adapter ring (7a) is interrupted in the circumferential direction.

3. Air spring (1) according to Claim 1 or 2, **characterized in that** the pleated bellows (6) is fastened to the outer guide (5) via the adapter ring (7a), wherein the adapter ring (7a) is fastened to the outer guide (5) by means of the clamping means (7b).

4. Air spring (1) according to one of Claims 1 to 3, **characterized in that** the adapter ring (7a) comprises an inner ring (8a) and an outer ring (8b), wherein the inner ring (8a) is connected to the outer ring (8b).

5. Air spring (1) according to Claim 4, **characterized in that** the inner ring (8a) has means (9a) in the direction of the outer ring (8b) for fixing the clamping means (7b).

6. Air spring (1) according to Claim 4 or 5, **characterized in that** the inner ring (8a) has means (9b) towards the outer guide (5) for fixing the adapter ring (7a) to the outer guide (5).

7. Air spring (1) according to one of Claims 1 to 6, **characterized in that** the clamping means (7b) is inserted into the adapter ring (7a), in particular between inner ring (8a) and outer ring (8b).

8. Air spring (1) according to one of Claims 1 to 7, **characterized in that** the pleated bellows (6) has a pleat (11) with two angles, in particular with right angles, wherein the pleated bellows (6) is fixed in a form-fitting manner to the adapter ring (7a) by means of the pleat (11).

9. Air spring (1) according to one of Claims 1 to 8, **characterized in that** the outer guide (5) is fixed to the air spring bellows (4) by means of an inner clamping ring (10).

10. Air spring (1) according to one of Claims 1 to 9, **characterized in that** the outer guide (5) has a tapered clamping region (12).

11. Air spring (1) according to Claim 9 or 10, **characterized in that** the fastening means (7) is positioned on the outer guide (5), in particular in the clamping region (12), at the same height as the inner clamping ring (10).

12. Air spring (1) according to one of Claims 1 to 11, **characterized in that** the pleated bellows (6) surrounds the rolling-contact surfaces of air spring piston (3) and air spring cover (2), wherein the pleated bellows (6) is fastened to the air spring piston (3) and/or air spring cover (2).

13. Running gear for a motor vehicle, in particular an air spring system, having an air spring (1) according to one of Claims 1 to 12.

## Revendications

1. Ressort pneumatique (1) pour un châssis d'un véhicule automobile, comprenant un couvercle de ressort pneumatique (2) et un piston de ressort pneumatique (3), dans lequel un soufflet de ressort pneumatique (4) en matériau élastomère est bloqué de manière étanche à l'air entre le couvercle de ressort pneumatique (2) et le piston de ressort pneumatique (3), le soufflet de ressort pneumatique (4) étant entouré au moins partiellement par un dispositif de guidage externe en forme de douille (5), un soufflet plissé (6) entourant le soufflet de ressort pneumatique (4) et le dispositif de guidage externe (5), **caractérisé en ce qu'**un moyen de fixation (7) perméable à l'air, réalisé séparément, est prévu entre le dispositif de guidage externe (5) et le soufflet plissé (6), au moyen duquel le soufflet plissé (6) est fixé au dispositif de guidage externe (5), dans lequel le moyen de fixation (7) est réalisé en plusieurs parties et comprend une bague d'adaptation (7a) et un moyen de blocage (7b).

2. Ressort pneumatique (1) selon la revendication 1, **caractérisé en ce que** la bague d'adaptation (7a) est interrompue dans la direction périphérique.

3. Ressort pneumatique (1) selon la revendication 1 ou 2, **caractérisé en ce que** le soufflet plissé (6) est fixé au dispositif de guidage externe (5) par l'intermédiaire de la bague d'adaptation (7a), la bague d'adaptation (7a) étant fixée au dispositif de guidage externe (5) à l'aide du moyen de blocage (7b).

4. Ressort pneumatique (1) selon l'une quelconque des revendications 1 à 3, **caractérisé en ce que** la bague d'adaptation (7a) comprend une bague intérieure (8a) et une bague extérieure (8b), la bague intérieure (8a) étant reliée à la bague extérieure (8b).

5. Ressort pneumatique (1) selon la revendication 4, **caractérisé en ce qu'**en direction de la bague extérieure (8b), la bague intérieure (8a) présente des moyens (9a) pour fixer le moyen de blocage (7b).

6. Ressort pneumatique (1) selon la revendication 4 ou 5, **caractérisé en ce que** la bague intérieure (8a) présente vers le dispositif de guidage externe (5) des moyens (9b) pour fixer la bague d'adaptation (7a) au dispositif de guidage externe (5).

7. Ressort pneumatique (1) selon l'une quelconque des revendications 1 à 6, **caractérisé en ce que** le moyen de blocage (7b) est inséré dans la bague d'adaptation (7a), en particulier entre la bague intérieure (8a) et la bague extérieure (8b).

8. Ressort pneumatique (1) selon l'une quelconque des revendications 1 à 7, **caractérisé en ce que** le soufflet plissé (6) présente un pli (11) à deux angles, en particulier à angles droits, le soufflet plissé (6) étant fixé par complémentarité de forme à la bague d'adaptation (7a) au moyen du pli (11).

9. Ressort pneumatique (1) selon l'une quelconque des revendications 1 à 8, **caractérisé en ce que** le dispositif de guidage externe (5) est fixé au soufflet de ressort pneumatique (4) au moyen d'une bague de blocage intérieure (10).

10. Ressort pneumatique (1) selon l'une quelconque des revendications 1 à 9, **caractérisé en ce que** le dispositif de guidage externe (5) présente une zone de serrage amincie (12).

11. Ressort pneumatique (1) selon la revendication 9 ou 10, **caractérisé en ce que** le moyen de fixation (7) est positionné au même niveau que la bague de blocage intérieure (10) sur le dispositif de guidage externe (5), en particulier dans la zone de serrage (12).

12. Ressort pneumatique (1) selon l'une quelconque des revendications 1 à 11, **caractérisé en ce que** le soufflet plissé (6) entoure les surfaces de roulement du piston de ressort pneumatique (3) et du couvercle de ressort pneumatique (2), le soufflet plissé (6) étant fixé au piston de ressort pneumatique (3) et/ou au couvercle de ressort pneumatique (2).

13. Châssis pour un véhicule automobile, en particulier un système de ressort pneumatique, comprenant un ressort pneumatique (1) selon l'une quelconque des revendications 1 à 12.
